# EUROPÄISCHE PATENTSCHRIFT

(11) **EP 1 194 707 B1**
(45) Veröffentlichungstag und Bekanntmachung des Hinweises auf die Patenterteilung: **16.10.2002**
(21) Anmeldenummer: 00945898.5
(22) Anmeldetag: 07.07.2000
(51) Int. Cl.: F16H 3/44, F16H 57/04, B60K 41/06

(54) **AUTOMATGETRIEBE**
AUTOMATIC GEARBOX
BOITE DE VITESSES AUTOMATIQUE

(30) Priorität: 13.07.1999 DE 19932613
(43) Veröffentlichungstag der Anmeldung: 10.04.2002
(73) Patentinhaber: ZF FRIEDRICHSHAFEN AG, 88038 Friedrichshafen (DE)
(72) Erfinder: HAUPT, Josef, D-88069 Tettnang (DE)
(86) Internationale Anmeldenummer: EP0006480
(87) Internationale Veröffentlichungsnummer: WO01004513

(56) Entgegenhaltungen:
- EP-A- 0 419 782
- EP-A- 0 483 764
- EP-A- 0 825 359
- DE-A- 2 937 366
- DE-A- 19 625 355
- DE-A- 19 912 481
- DE-C- 4 120 540
- GB-A- 2 249 361
- US-A- 4 674 358

## Beschreibung

Die vorliegende Erfindung betrifft ein Automatgetriebe für Kraftfahrzeuge mit mindestens sechs Gangstufen und den weiteren Merkmalen des Oberbegriffs von Auspruch 1.

Mehrstufige Automatgetriebe sind seit langem bekannt. Sie bestehen üblicherweise aus Planetensätzen, die mittels Kupplungen bzw. Bremsen geschaltet werden und über einen hydrodynamischen Drehmomentwandler mit dem Antrieb des Fahrzeugs, insbesondere einer Brennkraftmaschine verbunden sind.

Frühe, mehrstufige Automatgetriebe wurden als Drei-Gang-Getriebe ausgebildet, die einen doppelten Planetensatz und vier oder fünf Kupplungen aufwiesen. Es wurden auch komplexere Vier-Gang-Getriebe hergestellt, die ausgehend von diesen klassischen Drei-Gang-Getrieben konstruiert wurden, indem diesen ein einfacher Planetensatz mit zwei Übersetzungsverhältnissen und zwei Kupplungen bzw. Bremsen hinzugefügt wurden, so daß die Anordnungen insgesamt einen doppelten Planetensatz, einen einfachen Planetensatz, sechs oder sieben Kupplungen bzw. Bremsen sowie den Drehmomentwandler und eine Überbrückungskupplung aufwiesen.

Inzwischen wurden auch Fünf-Gang- und Sechs-Gang-Getriebe entwickelt, die zusätzlich einen Planetensatz mit zwei Übersetzungsverhältnissen und zwei Kupplungen bzw. Bremsen aufwiesen. Dies führt zu mehrstufigen Automatgetrieben mit insgesamt einem doppelten Planetensatz, einem einfachen Planetensatz, sieben oder acht Kupplungen bzw. Bremsen zusätzlich zum Drehmomentwandler mit der Überbrükkungskupplung, die ebenfalls einen erheblichen Raumbedarf aufweisen.

Ein gattungsgemäßes Mehrstufen-Automatgetriebe mit naßlaufenden Kupplungen bzw. Bremsen in Lamellenbauweise ist in der DE 44 15 664 der Anmelderin beschrieben. Jede Kupplung bzw. Bremse besteht dabei aus einem ersten Zylinder mit Außenlamellen, einem zweiten Zylinder mit Innenlamellen, einem Kolben und einem Rückstellelement, wobei beide Zylinder im Bereich der Lamellen mit axial verlaufenden Nuten versehen sind, so daß die Lamellen durch den Kolben axial verschiebbar sind. Die Drehmomentübertragung Zylinder/Lamelle erfolgt formschlüssig, wobei die Kupplung schließt, indem der Kolben die Lamellen gegen einen Endanschlag drückt. Die Kraft zum Verstellen der Kolben wird durch das im Getriebe enthaltene Öl aufgebracht. Die Kupplung öffnet, indem die Kraftwirkung des Öls abgebaut wird. Durch das Rückstellelement wird der Kolben in seine Ausgangslage zurückgeschoben, wodurch die reibschlüssige Verbindung der Innen- und Außenlamellen aufgehoben wird.

Aus der am 8.12.1999 veröffentlichten EP-A-962680 ist ein Automatgetriebe für Kraftfahrzeuge mit mindestens sechs Gangstufen bekannt, das einen Hauptradsatz, einen in Kraftflußrichtung vor oder parallel zu dem Hauptradsatz angeordneten Vorschaltradsatz, mehrere naßlaufende Kupplungen bzw. Bremsen sowie eine Pumpe zur Erzeugung des Schaltdruckes für die Kupplungen bzw. Bremsen in den einzelnen Gangstufen aufweist, und das über einen Drehschwingungsdämpfer mit einem Antriebsmotor des Kraftfahrzeugs verbunden ist, wobei Antriebsmotor, Vorschaltradsatz (1) und Hauptradsatz (2) koaxial zueinander angeordnet sind,
wobei der Vorschaltradsatz nicht schaltbar ausgebildet ist und, bezogen auf den Antriebsmotor, räumlich hinter dem Hauptradsatz auf der dem Antriebsmotor abgewandten Seite des Automatgetriebes angeordnet ist, und wobei der Abtrieb des Hauptradsatzes mit einem gelagerten Stirnrad verbunden ist, welches mit einem Differential wirkverbunden ist.

Aufgabe der vorliegenden Erfindung ist es, ein Automatgetriebe mit mindestens sechs Gangstufen und großer Spreizung zu schaffen, das einen kompakten Aufbau aufweist und sich ohne Schwierigkeit in Fahrzeugen mit Vorderradantrieb und quer liegendem Motor anordnen läßt.

Ausgehend von einem Automatgetriebe der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Erfindungsgemäß ist also vorgesehen, daß eine der Kupplungen des Grundgetriebes sowohl die Anfahrkupplung für das Kraftfahrzeug ist als auch die Schaltkupplung für den ersten Gang und für den Rückwärtsgang durch entsprechende Auswahl und Koppelung der Zahnräder des Radsatzes.

Die Verwendung einer Kupplung des Grundgetriebes als nasse Anfahrkupplung ermöglicht den Entfall des bisher üblichen separaten Anfahrelementes, z. B. eines hydrodynamischen Drehmomentwandlers. Diese Anfahrkupplung übernimmt dabei mehrere Funktionen im Getriebe: zusätzlich zu ihrer primären Aufgabe als Schaltkupplung beim Gangwechsel übernimmt sie die Funktion des Anfahrens.

Die entsprechende Auswahl des Radsatzes dergestalt, daß mit ein und derselben Anfahrkupplung der Kraftschluß sowohl für den ersten Gang als auch für den Rückwärtsgang hergestellt werden kann, bietet den Vorteil, daß nur diese Anfahrkupplung thermisch und regelungstechnisch derart ausgebildet werden muß, daß das Anfahren sowohl in Vorwärtsrichtung als auch in Rückwärtsrichtung ermöglicht wird.

Die thermische und regelungstechnische Ausbildung der erfindungsgemäßen Anfahrkupplung ist derart zu wählen, daß diese die thermische Belastung beim Anfahren problemlos erträgt und auch ein feinfühliges Anfahren ermöglicht. Dies gewährleistet einen hohen Fahrkomfort beim Anfahren bei einem geringerem Aufwand als bei den herkömmlichen mehrstufigen Automatgetrieben, bei denen beispielsweise ein hydrodynamischer Drehmomentwandler die Anfahrfunktion übernimmt. Ausrollschaltungen in den ersten Gang erfordern ein feinfühliges Aufbringen des Kupplungsmoments.

Als eine besonders vorteilhafte erfindungsgemäße Ausbildung der Anfahrkupplung wird hierzu vorgeschlagen, die Kupplung mit zwei Kolben dergestalt auszubilden, daß der zweite Kolben bei Druckbeaufschlagung nur einen Teil der Reiblamellen der Anfahrkupplung zusammenpreßt und auf diese Weise das Verhältnis Druck zu Moment vergrößert. Hierzu können beide Kolben gleichzeitig oder auch unabhängig voneinander mit Druck beaufschlagt werden.

Eine vorteilhafte Ausbildung und Anordnung der Anfahrkupplung als Bremse, wie beispielsweise in der DE-A-196 25 355 beschrieben, ermöglicht eine einfache Zuführung des Kühlöls, da die Ölführung nicht durch drehende Bauteile mit der entsprechenden aufwendigen Abdichtung verläuft, beispielsweise durch Rechteckringe.

Da eine große Kühlölmenge nur während des Anfahrens erforderlich ist, wird vorteilhafterweise die zugeführte Kühlölmenge gesteuert, und zwar durch Steuerung der Ölmenge zeitgleich zum realen Wärmeanfall. Dieser wird durch elektronische Auswertung von Moment und Differenzdrehzahl der Anfahrkupplung ermittelt, so daß die Ölversorgung bedarfsgerecht ausgelegt werden kann, was zu einer Minimierung der Getriebeverluste führt. Insbesondere kann außerhalb der Schlupfphase der Anfahrkupplung die Kühlung der letzteren minimal bis sogar Null sein. Das dabei eingesparte Kühlöl kann dann für die übrigen Kupplungen und für die Kühlung der Radsätze verwendet werden.

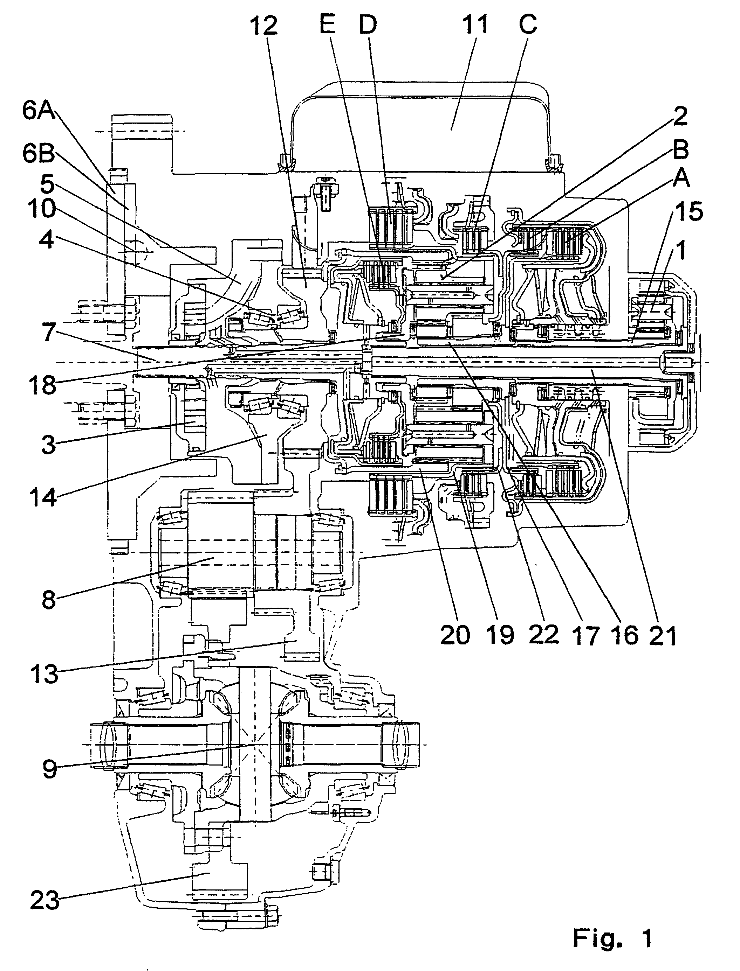

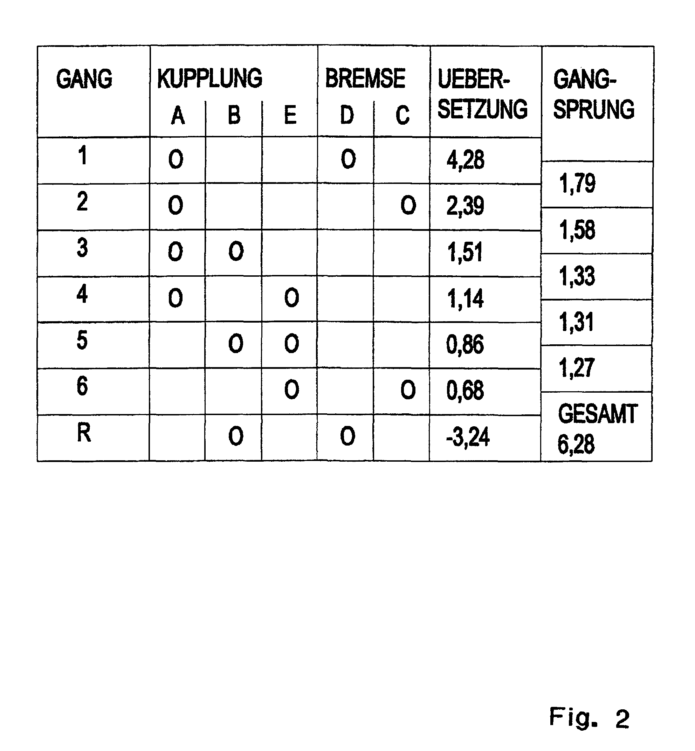

Im folgenden wird die Erfindung anhand der Zeichnung nach Fig. 1 und der Kupplungslogik nach Fig. 2 näher erläutert, in der ein vorteilhaftes Ausführungsbeispiel dargestellt ist.
Es zeigen:
- Fig. 1: eine Schnittzeichnung eines erfindungsgemäß ausgeführten 6-Gang-Automatgetriebes und
- Fig. 2: eine Tabelle der Kupplungslogik des in Fig. 1 dargestellten Automatgetriebes.

Die Fig. 1 zeigt einen Querschnitt durch ein erfindungsgemäßes Automatgetriebe mit sechs Gangstufen, wobei mit 7 eine Eingangswelle bezeichnet ist, die über einen Drehschwingungsdämpfer mit der Kurbelwelle einer nicht dargestellten Brennkraftmaschine in Verbindung steht. An der der Brennkraftmaschine räumlich abgewandten Seite des Grundgetriebes ist ein Vorschaltradsatz 1 vorgesehen, welcher in Kraftflußrichtung vor einem Hauptradsatz 2 angeordnet ist und eine Zusatzübersetzung darstellt und zusammen mit dem im Grundgetriebe angeordneten, beliebig gestalteten Hauptradsatz 2 eine gegenüber üblichen Vier-Gang-Automatgetrieben höhere Gesamtspreizung sowie eine gute Gangabstufung erzielt. Je nach Auslegung der konstanten Getriebeübersetzung ergeben sich deutliche Vorteile hinsichtlich Fahrleistung oder hinsichtlich Kraftstoffverbrauch.

Der Vorschaltradsatz 1 ist als einfacher Planetenradsatz ausgeführt, wobei die Eingangswelle 7 mit der Antriebswelle 21 des Vorschaltradsatzes 1 verbunden ist und im ausgeführten Beispiel dessen Hohlrad antreibt. Die Sonne des Vorschaltradsatzes ist gehäusefest. Mit 15 ist eine Abtriebswelle des Vorschaltradsatzes 1 bezeichnet, über die der Kraftfluß an den Hauptradsatz 2 weitergeführt wird. Prinzipiell sind auch andere Planetenradsatzkonzepte für die Ausgestaltung des Vorschaltradsatzes 1 darstellbar, mit dann entsprechend anderer Wellenanbindung.

Der Hauptradsatz 2 ist im erfindungsgemäß ausgeführten Beispiel als Ravigneaux-Satz ausgeführt, mit drei Antriebswellen 16, 17 und 18. Die erste Antriebswelle 16 ist mit einer Kupplung A verbunden. Die zweite Antriebswelle 17 ist mit einer Kupplung B verbunden. Die dritte Antriebswelle 18 ist mit einer Kupplung E und mit der Eingangswelle 7 verbunden. Mit 19 ist eine Stützwelle des Hauptradsatzes 2 bezeichnet, die sowohl mit einer Bremse D als auch mit der dritten Antriebswelle 18 verbunden ist. Mit 22 schließlich ist eine zweite Stützwelle des Hauptradsatzes 2 bezeichnet, die sowohl mit einer Bremse C als auch mit der zweiten Antriebswelle 17 verbunden ist.
Je nach Gangstufe wird der Kraftfluß von der Eingangswelle 7 über die gemäß Schaltlogik mit Druck beaufschlagten Kupplungen bzw. Bremsen über die Radsatzkombination 1, 2 zur Abtriebswelle 20 des Hauptradsatzes 2 geführt.

Prinzipiell kann der Hauptradsatz 2 auch in beliebig anderer Bauweise dargestellt werden, mit dann entsprechend anderer Anbindung an den Abtrieb des Vorschaltradsatzes, an den Getriebeabtrieb und an die Kupplungen bzw. Bremsen.

Die Gesamtübersetzung ergibt sich aus den Kenngrößen des Vorschaltradsatzes 1, des Hauptradsatzes 2 und einer konstanten Übersetzungsstufe. Die konstante Übersetzungsstufe besteht aus einem mit einer Abtriebswelle 20 des Hauptradsatzes 2 fest verbundenen Stirnrad 12, einem mit der kurzen Seitenwelle 8 verbundenen Stirnrad 13, einer Stirnradverzahnung der kurzen Seitenwelle 8 und einem mit einem Differential 9 verbundenen Stirnrad 23.

Als eine besonders vorteilhafte Ausgestaltung der konstanten Getriebeübersetzungsstufe wird erfindungsgemäß vorgeschlagen, die Stirnräder 12, 13, 8 und 23 in Getriebelängsrichtung dergestalt anzuordnen, daß das im Durchmesser große Seitenrad 23 in Getriebelängsrichtung auf der dem Antriebsmotor zugewandten Seite des Differentials 9 liegt, d. h., die Differentialmitte liegt in Getriebelängsrichtung, bezogen auf den Antriebsmotor, hinter der Verzahnung des Stirnrads 23. Auf diese Weise ergibt sich eine sehr kompakte Getriebebauform und eine geringe Baulänge speziell in dem Differentialbereich des Fahrzeugs, in dem üblicherweise der Fahrschemel der Achs- und Aggregateaufhängung verläuft.

Weiterhin ist in Fig. 1 mit 3 eine Ölpumpe, beispielsweise eine Innenzahnradpumpe, bezeichnet, die im Bereich zwischen Antriebsmotor und eines Stirnradlagers 4 des Stirnrades 12 angeordnet ist und die direkt von der Antriebswelle 7 angetrieben wird. Eine Lagerplatte 14, welche das Stirnradlager 4 aufnimmt, schließt sich unmittelbar an eine Zwischenplatte 5, welche die Pumpe 3 aufnimmt, an. Eine derartige konstruktive Anordnung von Pumpe 3 und Lagerung des Stirnrads 12 ermöglicht eine optimale Platzausnutzung durch die Einbeziehung der Lagerplatte 14 des Stirnradlagers 4 in die Ölkanalführung im Pumpenbereich zusammen mit dem üblichen Ölführungslabyrinth der Zwischenplatte 5.

In einer anderen Ausführungsform kann vorgesehen sein, die Pumpe 3 direkt in ein nicht näher dargestelltes Gehäuseteil aufzunehmen und die pumpennahen Ölführungskanäle direkt im Getriebegehäuse in Verbindung mit Ölführungskanälen in der Lagerplatte 14 zu integrieren.

Mit 6B ist ferner eine Sekundär-Schwungmasse bezeichnet, die zwischen dem nicht dargestellten Antriebsmotor, vorzugsweise einer Brennkraftmaschine, und der Antriebswelle 7 in unmittelbarer Nähe einer Primär-Schwungmasse 6A vorgesehen und mit dieser über ein Feder-/Dämpferelement 10 verbunden ist. Die Kombination dieser Bauteile 6A, 6B und 10 bilden eine funktionale Einheit als Zweimassenschwungrad zur Drehschwingungsisolation bei der Drehmomentübertragung von der Brennkraftmaschine zum Getriebe. Andere Systeme zur Drehschwingungsdämpfung, beispielsweise ein hydraulischer Torsionsdämpfer, sind in ähnlicher Weise konstruktiv integrierbar.

Die erfindungsgemäß vorgeschlagene Anordnung der Komponenten Drehschwingungsdämpfer, Ölpumpe und Stirnradlagerung ermöglicht eine baulängenoptimale Bauweise. In Verbindung mit einer im Getriebe integrierten Anfahrbremse D, die auf einem größeren Durchmesser angeordnet ist als der Hauptradsatz 2, und die sich in Getriebelängsrichtung unmittelbar hinter der kurzen Seitenwelle 8 anschließt, ergibt sich ein besonders kompakter Getriebeaufbau mit optimaler Bauraumausnutzung, so daß ein Quereinbau auch für einbauraumkritische Fahrzeuge in Frage kommt. Durch entsprechende Schachtelung der Stirnradachsen sind kleine Achsabstände möglich und damit auch kleine Stirnräder mit dem damit verbundenen Geräuschvorteil, geringeren Kosten und einem niedrigeren Gewicht. Die konstante Übersetzungsstufe mit den Stirnrädern 12, 13, 8 und 23 ist antriebsseitig und motornah im Getriebe angeordnet und von Getriebebauteilen und vom Motor umgeben, so daß eine Geräuschabstrahlung minimiert werden kann.

Wie die Fig. 1 ferner erkennen läßt, ermöglicht der Vorschaltradsatz 1 einen kleineren Getriebegehäusedurchmesser im bauraumkritischen Bereich des Fahrzeuglängsträgers beim Quereinbau des Motor-/Getriebeeinheit.

Fig. 2 zeigt die Kupplungslogik des in Fig. 1 dargestellten Getriebes.

Mit A bis E sind hier die fünf für das erfindungsgemäß ausgeführte 6-Gang-Getriebe erforderlichen Kupplungen bzw. Bremsen bezeichnet, wobei die Bremse D als nasses Anfahrschaltelement vorgesehen ist, das mehrere Funktionen ausführt. Neben der Aufgabe der Bremse D als Schaltelement während des Gangwechsels vom ersten in den zweiten Gang stellt sie den Kraftschluß in den Gängen Eins und R her und übernimmt die Aufgabe des Anfahrens. Dazu werden die Zahnräder des Radsatzsystems, das sich aus dem Vorschaltradsatz 1 und dem Hauptradsatz 2 zusammensetzt, so gewählt, daß mit ein- und demselben Schaltelement, d. h. der Anfahrbremse D, der Kraftschluß sowohl für den ersten Gang als auch für den Rückwärtsgang hergestellt werden kann. Dies bedeutet, daß nur diese Anfahrbremse D thermisch und regelungstechnisch derart ausgebildet wird, daß sowohl das Anfahren in Vorwärtsrichtung als auch das Anfahren in Rückwärtsrichtung möglich ist.

Die thermische und regelungstechnische Ausbildung der Anfahrbremse D ist so zu wählen, daß sie die hohe thermische Belastung beim fahrerwunschgemäßen Anfahren erträgt und zugleich ein feinfühliges Anfahren ermöglicht. Dies gewährleistet einerseits einen hohen Fahrkomfort beim Anfahren und ermöglicht andererseits einen geringeren Bauaufwand gegenüber den herkömmlichen mehrstufigen Automatgetrieben mit separatem Anfahrelement, beispielsweise mit einem hydrodynamischen Wandler.

Für die konstruktive Ausgestaltung des Anfahrschaltelements ist die Bauform "Bremse" vorteilhaft, da hier eine einfache Zuführung von Kühlöl ohne eine Ölführung durch drehende Bauteile und der damit verbundenen aufwendigen Abdichtung möglich ist.

Die zur Kühlung erforderliche Kühlmenge wird nun gesteuert, da große Kühlmengen nur während des Anfahrens erforderlich sind. Eine bedarfsgerechte Steuerung der Kühlölmenge erfolgt dabei aufgrund des realen Wärmeanfalls, wobei dieser durch elektronische Auswertung der aktuellen Signalgrößen von Moment und Differenzdrehzahl der Anfahrbremse D von der elektronischen Getriebesteuerung zeitkorrekt berechnet wird. Dies bedeutet, daß die Ölversorgung kleiner ausgelegt werden kann, so daß eine Minimierung der Getriebeverluste ermöglicht wird. Beim Einlegen der Vorwärtsfahrstufe wird eine im ersten Gang drehmomentführende Kupplung A geschlossen und die Anfahrbremse D angelegt, wobei die Kühlung der letzteren minimal bis sogar Null sein kann, da in diesem Zustand kein oder nur ein sehr geringes Drehmoment übertragen wird. Gleiches gilt für das Einlegen der Rückwärtsfahrstufe, bei der eine Kupplung B geschaltet und die Anfahrbremse D angelegt wird. Erst während der nachfolgenden Reibphase wird der Kühlölstrom vergrößert.

Eine thermische Überdimensionierung der Anfahrbremse D ist nicht erforderlich, wenn, wie erfindungsgemäß vorgeschlagen, bei Erreichen einer Grenztemperatur, die durch das Moment und die Schlupfdrehzahl über der Zeit von der elektronischen Getriebesteuerung errechnet wird, der Motorelektronik über eine Leitung oder Datenbus signalisiert wird, daß die Motorlast zurückzuregeln ist, und zwar auf einen Wert, der thermisch von der Anfahrbremse D problemlos ausgehalten werden kann. Dies kann in zeitlichen Stufen geschehen, wobei, bei Beibehaltung der Grenztemperatur, die Motorlast von der Motorsteuerung stufenlos oder auch in Stufen als Zeitfunktion zurückgenommen wird.

Eine Zuführung des Kühlölstroms zur Anfahrbremse D ist über eine einfache konstruktive Gestaltung des Getriebegehäuses möglich. Auf diese Weise wird die Kanalführung erleichtert und insbesondere die Ansteuerbarkeit des Schaltelements verbessert.

Eine vorteilhafte Weiterbildung des erfindungsgemäßen Automatgetriebes ermöglicht eine sogenannte Hill-Holder-Funktion, d. h. eine Funktion, die ein Zurückrollen des Fahrzeugs beim Stehen am Hang verhindert, wie beispielsweise in der DE-A-196 25 355 der Anmelderin beschrieben. Hierzu wird das Abtriebsmoment durch gleichzeitiges Schließen der beiden Bremsen D und C am Getriebegehäuse und damit am Fahrzeug abgestützt, der Getriebeabtrieb also blockiert. Das gleichzeitige Öffnen der Kupplung A für die Vorwärtsfahrt bzw. der Kupplung B für die Rückwärtsfahrt verhindert ein Absterben der Brennkraftmaschine.

Die kurze Baulänge, das geringere Gewicht, die Kostenreduzierung sowie eine Reduzierung der Getriebeverluste durch den Entfall des hydrodynamischen Wandlers führen dazu, daß trotz des Vorsehens des zusätzlichen Vorschaltradsatzes 1 das erfindungsgemäße 6-Gang-Automatgetriebe besondere Vorteile für den Quereinbau in kleineren Fahrzeugen bietet. Weitere Vorteile ergeben sich durch den Spreizungsgewinn durch sechs Gangstufen, insbesondere hinsichtlich Fahrleistung und Kraftstoffverbrauch.

### Bezugszeichen

- 1: Vorschaltradsatz
- 2: Hauptradsatz
- 3: Pumpe
- 4: Stirnradlager
- 5: Zwischenplatte
- 6A: Primär-Schwungmgasse
- 6B: Sekundär-Schwungmasse
- 7: Eingangswelle
- 8: kurze Seitenwelle mit Stirnradverzahnung
- 9: Differential
- 10: Feder-/Dämpferelement
- 11: Einbauraum für hydraulisches Steuergerät
- 12: Stirnrad
- 13: Stirnrad
- 14: Stirnradlagerplatte
- 15: Abtriebswelle des Vorschaltradsatzes
- 16: erste Antriebswelle des Hauptradsatzes
- 17: zweite Antriebswelle des Hauptradsatzes
- 18: dritte Antriebswelle des Hauptradsatzes
- 19: erste Stützwelle des Hauptradsatzes
- 20: Abtriebswelle des Hauptradsatzes
- 21: Antriebswelle des Vorschaltradsatzes
- 22: zweite Stützwelle des Hauptradsatzes
- 23: Stirnrad

- A, B, E: Kupplungen
- C, D: Bremsen

## Patentansprüche

1. Automatgetriebe für Kraftfahrzeuge mit mindestens sechs Gangstufen, das einen Hauptradsatz (2), einen in Kraftflußrichtung vor oder parallel zu dem Hauptradsatz (2) angeordneten Vorschaltradsatz (1), mehrere naßlaufende Schaltelemente in Form von Kupplungen bzw. Bremsen (A bis E) sowie eine Pumpe (3) zur Erzeugung des Schaltdruckes für die Kupplungen bzw. Bremsen (A bis E) in den einzelnen Gangstufen aufweist, und das über einen Drehschwingungsdämpfer mit einem Antriebsmotor des Kraftfahrzeugs verbunden ist, wobei Antriebsmotor, Vorschaltradsatz (1) und Hauptradsatz (2) koaxial zueinander angeordnet sind, **dadurch gekennzeichnet, daß** der Vorschaltradsatz (1) nicht schaltbar ausgebildet ist und, bezogen auf den Antriebsmotor, räumlich hinter dem Hauptradsatz (2) auf der dem Antriebsmotor abgewandten Seite des Automatgetriebes angeordnet ist, und daß der Abtrieb des Hauptradsatzes (2) mit einem gelagerten Stirnrad (12) verbunden ist, welches mit einem Differential (9) wirkverbunden ist, wobei das Lager (4) zwischen dem Stirnrad (12) und der Pumpe (3) angeordnet ist.

2. Automatgetriebe nach Anspruch 1, **dadurch gekennzeichnet, daß** das Radsatzsystem aus Vorschaltradsatz (1) und Hauptradsatz (2) derart ausgelegt ist, daß der Kraftschluß sowohl für den ersten Gang als auch für den Rückwärtsgang durch das gleiche Schaltelement herstellbar ist.

3. Automatgetriebe nach Anspruch 2, **dadurch gekennzeichnet, daß** der Kraftschluß sowohl für den ersten Gang als auch für den Rückwärtsgang durch eine im Automatgetriebe integriertes Anfahrschaltelement, i.e. eine Anfahrbremse (D), herstellbar ist.

4. Automatgetriebe nach mindestens einem der vorhergehenden Ansprüche, **dadurch gekennzeichnet, daß** das Anfahrschaltelement (D) in Getriebelängsrichtung unmittelbar neben der konstanten Übersetzungsstufe (12, 13, 8, 23) auf deren dem Antriebsmotor abgewandten Seite angeordnet ist, auf einem größeren Durchmesser als der Hauptradsatz (2).

5. Automatgetriebe nach mindestens einem der vorhergehenden Ansprüche, **dadurch gekennzeichnet, daß** das Schaltelement (C) für den zweiten und sechsten Gang in Getriebelängsrichtung unmittelbar neben dem Anfahrschaltelement (D) auf dessen dem Antriebsmotor abgewandten Seite angeordnet ist, auf einem größeren Durchmesser als der Hauptradsatz (2).

6. Automatgetriebe nach mindestens einem der vorhergehenden Ansprüche, **dadurch gekennzeichnet, daß** die Schaltelemente (A, B), welche die Abtriebswelle (15) des Vorschaltradsatzes (1) mit den Eingangswellen (16, 17) des Hauptradsatzes (2) verbinden, in Getriebelängsrichtung zwischen dem Hauptradsatz (2) und dem Vorschaltradsatz (1) angeordnet sind.

7. Automatgetriebe nach mindestens einem der vorhergehenden Ansprüche, **dadurch gekennzeichnet, daß** das Schaltelement (E), welches die Eingangswelle (7) mit der dritten Antriebswelle (18) des Hauptradsatzes (2) verbindet, in Getriebelängsrichtung zwischen der konstanten Übersetzungsstufe (12, 13, 8, 23) und dem Hauptradsatz (2) angeordnet ist.

8. Automatgetriebe nach mindestens einem der vorhergehenden Ansprüche, **dadurch gekennzeichnet, daß** die Pumpe (3) in Getriebelängsrichtung zwischen dem Drehschwingungsdämpfer und dem Stirnradlager (4) des ersten Stirnrades (12) der konstanten Übersetzungsstufe (12, 13, 8, 23) angeordnet ist, wobei sich die Lagerplatte (14) des Stirnradlagers (4) unmittelbar an die Zwischenplatte (5), welche die Pumpe (3) aufnimmt, anschließt, und wobei in der Lagerplatte (14), in Verbindung mit der Zwischenplatte (5), Ölführungskanäle zur Ölführung im Pumpenbereich vorgesehen sind.

9. Automatgetriebe nach mindestens einem der vorhergehenden Ansprüche, **dadurch gekennzeichnet, daß** die konstante Übersetzungsstufe (12, 13, 8, 23) derart angeordnet ist, daß das Differential (9) in Getriebelängsrichtung auf der dem Antriebsmotor abgewandten Seite des Stirnrades (23) liegt.

10. Automatgetriebe nach den Ansprüchen 2, 3, **dadurch gekennzeichnet, daß** das Anfahrschaltelement (D) durch einen variablen Ölstrom kühlbar ist und daß die Kühlölmenge als Funktion des Wärmeanfalls steuerbar ist, der durch elektronische Auswertung von Moment und Differenzdrehzahl des Anfahrelements erfaßt wird.

11. Automatgetriebe nach einem der Ansprüche 2, 3, 10, **dadurch gekennzeichnet, daß** das Automatgetriebe mit der Motorelektronik elektrisch verbunden ist und dieser bei Erreichen einer Grenztemperatur des Anfahrelements ein Signal übermittelt, das dazu führt, daß die Motorlast auf einen Wert zurückgeregelt wird, der der oberen thermischen Belastbarkeitsgrenze des Anfahrelements entspricht.

12. Automatgetriebe nach Anspruch 11, **dadurch gekennzeichnet, daß** die Last stufenlos zurück geregelt wird.

13. Automatgetriebe nach Anspruch 11, **dadurch gekennzeichnet, daß** die Last in Stufen zurück geregelt wird.

14. Automatgetriebe nach den Ansprüchen 2 und 3, **dadurch gekennzeichnet, daß** das Anfahrschaltelement über zwei Kolben mit Druck beaufschlagbar ist, wobei der zweite Kolben nur auf einen Teil der Reiblamellen des Anfahrelements wirkt.

15. Automatgetriebe nach Anspruch 14, **dadurch gekennzeichnet, daß** beide Kolben des Anfahrelements gleichzeitig mit Druck beaufschlagbar sind.

16. Automatgetriebe nach Anspruch 14, **dadurch gekennzeichnet, daß** beide Kolben des Anfahrschaltelements unabhängig voneinander mit Druck beaufschlagbar sind.

17. Automatgetriebe nach einem der vorhergehenden Ansprüche, **dadurch gekennzeichnet, daß** der Vorschaltradsatz (2) in einem separaten Gehäuseteil eines Getriebegehäuses angeordnet ist.

## Claims

1. Automatic transmission for motor vehicles with at least six gear steps, provided with a main gear set (2), an upstream gear set (1) arranged in power-flow direction upstream of or parallel to the main gear set (2), several wet shifting elements in the form of clutches or brakes (A to E) as well as a pump (3) for producing the pressure for the clutches or brakes (A to E) in the individual gear steps, and linked to a drive motor of the vehicle via a torsional vibration damper, with drive motor, upstream gear set (1) and main gear set (2) being arranged coaxially in relation to each other, **characterized in that** the upstream gear set (1) is not shiftable and - in relation to the drive motor - is arranged behind the main gear set (2) on the side of the automatic transmission not facing the drive motor, and that the output of the main gear set (2) is linked to a supported spur gear (12), which is actively linked to a differential (9), with the bearing (4) being arranged between the spur gear (12) and the pump (3).

2. Automatic transmission according to claim 1, **characterized in that** the gear set system composed of upstream gear set (1) and main gear set (2) is designed to permit frictional connection both for the first gear and for the reverse gear through the same shift element.

3. Automatic transmission according to claim 2, **characterized in that** the frictional connection can be effected both for the first gear and for the reverse gear through a starting element, i.e. a starting brake (D) integrated in the automatic transmission.

4. Automatic transmission according to at least one of the preceding claims, **characterized in that** the starting element (D) is arranged alongside the transmission directly next to the constant transmission ratio (12, 13, 8, 23) on the side not facing the drive motor, on a larger diameter than that of the main gear set (2).

5. Automatic transmission according to at least one of the preceding claims, **characterized in that** the shift element (C) for the second and sixth gear is arranged alongside the transmission immediately next to the starting element (D) on its side not facing the drive motor, on a larger diameter than that of t he main gear set (2).

6. Automatic transmission according to at least one of the preceding claims, **characterized in that** the shift elements (A, B) linking the output shaft (15) of the upstream gear set (1) with the input shafts (16, 17) of the main gear set (2) are arranged alongside the transmission between the main gear set (2) and the upstream gear set (1).

7. Automatic transmission according to at least one of the preceding claims, **characterized in that** the shift element (E), which links the input shaft (7) with the third drive shaft (18) of the main gear set (2), is arranged alongside the transmission between the constant transmission ratio (12, 13, 8, 23) and the main gear set (2).

8. Automatic transmission according to at least one of the preceding claims, **characterized in that** the pump (3) is arranged alongside the transmission between the torsional vibration damper and the spur gear bearing (4) of the first spur gear (12) of the constant reduction stage (12, 13, 8, 23), with the bearing plate (14) of the spur gear bearing (4) adjoining the intermediate plate (5), which accommodates the pump (3), and with the bearing plate (14), in conjunction with the intermediate plate (5), featuring oil ducts for oil supply in the pump area.

9. Automatic transmission according to at least one of the preceding claims, **characterized in that** the constant reduction stage (12, 13, 8, 23) is arranged in a manner that the differential (9) is located alongside the transmission on the side of the spur gear (23) not facing the drive motor.

10. Automatic transmission according to the claims 2 and 3, **characterized in that** the starting element (D) can be cooled by a variable oil flow and that the cooling oil quantity is controllable as a function of the heat rise registered through electronic evaluation of torque and differential speed of the starting element.

11. Automatic transmission according to one of the claims 2, 3, 10, **characterized in that** the automatic transmission is electrically linked with the engine electronics to which it transmits a signal as soon as the starting element reaches a limit temperature, which results in the engine load being reset to a value corresponding to the upper thermal load limit of the starting element.

12. Automatic transmission according to claim 11, **characterized in that** resetting of load is infinitely variable.

13. Automatic transmission according to claim 11, **characterized in that** resetting of load is effected in steps.

14. Automatic transmission according to the claims 2 and 3, **characterized in that** the starting element can be pressurized via two pistons, with the second piston acting only on some of the friction disks of the starting element.

15. Automatic transmission according to claim 14, **characterized in that** both pistons of the starting element can be pressurized simultaneously.

16. Automatic transmission according to claim 14, **characterized in that** both pistons of the starting element can be pressurized independently.

17. Automatic transmission according to one of the preceding claims, **characterized in that** the upstream gear set (2) is located in a separate housing section of a transmission housing.

## Revendications

1. Transmission automatique pour véhicules automobiles ayant au moins six étages de vitesses, qui comporte un train de pignons principal (2), un train de pignons de renvoi (1) disposé en amont du train de pignons principal (2) dans la direction du flux de force, ou en parallèle avec lui, plusieurs éléments de commutation travaillant dans un liquide, formés d'embrayages, respectivement de freins, (A à E), ainsi qu'une pompe (3) destinée à produire la pression de commutation pour les embrayages ou freins (A à E) dans les différents étages de vitesses, et qui est reliée à un moteur de propulsion de véhicule automobile par l'intermédiaire d'un amortisseur de vibrations de rotation, le moteur de propulsion, le train de pignons de renvoi (1) et le train de pignons principal (2) étant disposés coaxialement entre eux, **caractérisée en ce que** le train de pignons de renvoi (1) est construit sans possibilité de commutation et est disposé dans l'espace, derrière le train de pignons principal (2) relativement au moteur de propulsion, sur le côté de la transmission automatique qui est éloigné du moteur de propulsion, et **en ce que** l'élément de sortie du train de pignons principal (2) est relié à une roue droite (12) montée sur palier, qui est reliée fonctionnellement à un différentiel (9), le palier (4) étant disposé entre la roue droite (12) et la pompe (3).

2. Transmission automatique selon la revendication 1, **caractérisée en ce que** le système de trains de pignons composé du train de pignons de renvoi (1) et du train de pignons principal (2) est agencé de manière que le flux de force puisse être établi par le même élément de commutation aussi bien pour la première vitesse que pour la vitesse de marche arrière.

3. Transmission automatique selon la revendication 2, **caractérisée en ce que** le flux de force peut être établi par un élément de commutation de démarrage, c'est-à-dire un frein de démarrage (D) intégré dans la transmission automatique, aussi bien pour la première vitesse que pour la vitesse de marche arrière.

4. Transmission automatique selon au moins l'une des revendications précédentes, **caractérisée en ce que**, vu dans la direction longitudinale de la transmission, l'élément de commutation de démarrage (D) est disposé directement à côté de l'étage de rapport constant (12, 13, 8, 23) sur son côté éloigné du moteur de propulsion, sur un plus grand diamètre que le train de pignons principal (2).

5. Transmission automatique selon au moins l'une des revendications précédentes, **caractérisée en ce que**, vu dans la direction longitudinale de la transmission, l'élément de commutation (C) pour les deuxième et sixième vitesses est disposé directement à côté de l'élément de commutation de démarrage (D), sur le côté de cet élément qui est éloigné du moteur de propulsion, sur un plus grand diamètre que le train de pignons principal (2).

6. Transmission automatique selon au moins l'une des revendications précédentes, **caractérisée en ce que**, vu dans la direction longitudinale de la transmission, les éléments de commutation (A, B) qui relient l'arbre de sortie (15) du train de pignons de renvoi (1) aux arbres d'entrée (16, 17) du train de pignons principal (2) sont disposés entre le train de pignons principal (2) et le train de pignons de renvoi (1).

7. Transmission automatique selon au moins l'une des revendications précédentes, **caractérisée en ce que**, vu dans la direction longitudinale de la transmission, l'élément de commutation (E) qui relie l'arbre d'entrée (7) au troisième arbre d'entraînement (18) du train de pignons principal (2) est disposé entre l'étage de rapport de transmission constant (12, 13, 8, 23) et le train de pignons principal (2).

8. Transmission automatique selon au moins l'une des revendications précédentes, **caractérisée en ce que** la pompe (3), vue dans la direction longitudinale de la transmission, est disposée entre l'amortisseur de vibrations de torsion et le palier (4) de la première roue droite (12) de l'étage à rapport de transmission constant (12, 13, 8, 23), la plaque de palier (14) du palier (4) de la roue droite faisant directement suite à la plaque intermédiaire (5) qui reçoit la pompe (3), et des canaux de guidage de l'huile destinés à guider l'huile dans la région de la pompe étant prévus dans la plaque de palier (14) en combinaison avec la plaque intermédiaire (5).

9. Transmission automatique selon au moins l'une des revendications précédentes, **caractérisée en ce que** l'étage de rapport de transmission constant (12, 13, 8, 23) est disposé de manière que le différentiel (9), vu dans la direction longitudinale de la transmission, se trouve sur le côté de la roue droite (23) qui est éloigné du moteur de propulsion.

10. Transmission automatique selon les revendications 2 et 3, **caractérisée en ce que** l'élément de commutation de démarrage (D) peut être refroidi par un courant d'huile variable et **en ce que** le débit d'huile de refroidissement peut être commandé en fonction du dégagement de chaleur qui est détecté par l'analyse électronique du couple et de la vitesse de rotation différentielle de l'élément de démarrage.

11. Transmission automatique selon l'une des revendications 2, 3 et 10, **caractérisée en ce que** la transmission automatique est reliée électriquement à l'électronique du moteur et, lorsqu'on atteint une température limite de l'élément de démarrage, elle lui transmet un signal qui conduit au fait que la charge du moteur est ramenée par réglage à une valeur qui correspond à la limite de charge thermique supérieure de l'élément de démarrage.

12. Transmission automatique selon la revendication 11, **caractérisée en ce que** la charge est ramenée par réglage par variation continue.

13. Transmission automatique selon la revendication 11, **caractérisée en ce que** la charge est ramenée par réglage par échelons.

14. Transmission automatique selon les revendications 2 et 3, **caractérisée en ce que** l'élément de commutation de démarrage peut être sollicité en pression au moyen de deux pistons, le deuxième piston agissant seulement sur une partie des disques de friction de l'élément de démarrage.

15. Transmission automatique selon la revendication 14, **caractérisée en ce que** les deux pistons de l'élément de démarrage peuvent être chargés simultanément avec une pression.

16. Transmission automatique selon la revendication 14, **caractérisée en ce que** les deux pistons de l'élément de démarrage peuvent être chargés avec une pression indépendamment l'un de l'autre.

17. Transmission automatique selon l'une des revendications précédentes, **caractérisée en ce que** le train de pignons de renvoi (2) est disposé dans une partie de carter séparée appartenant à un carter de transmission.
